**Europäisches Patentamt**

**European Patent Office**

**Office européen des brevets**

(19)

(11) Veröffentlichungsnummer: **0 006 569**
**B1**

# (12) EUROPÄISCHE PATENTSCHRIFT

(45) Veröffentlichungstag der Patentschrift: **30.06.82**

(21) Anmeldenummer: **79102021.7**

(22) Anmeldetag: **19.06.79**

(51) Int. Cl.³: **B 60 Q 1/06,** G 05 D 3/10,
H 02 P 3/06

(54) **Stellantrieb für ein in mehrere Ruhelagen einstellbares bewegliches System.**

(30) Priorität: **05.07.78 DE 2829438**
**08.03.79 DE 2909063**

(43) Veröffentlichungstag der Anmeldung:
**09.01.80 Patentblatt 80/1**

(45) Bekanntmachung des Hinweises auf die Patenterteilung:
**30.06.82 Patentblatt 82/26**

(84) Benannte Vertragsstaaten:
**FR GB IT**

(56) Entgegenhaltungen:
**FR - A - 2 321 404**

(73) Patentinhaber: **SWF-Spezialfabrik für Autozubehör**
**Gustav Rau GmbH**
**Stuttgarter Strasse 119**
**D-7120 Bietigheim-Bissingen (DE)**

(72) Erfinder: **Bötz, Jakob**
**Neckarstrasse 8**
**D-7121 Ingersheim 1 (DE)**
Erfinder: **Mutschler, Erich**
**Allensteiner Strasse 23**
**D-7120 Bietigheim-Bissingen (DE)**
Erfinder: **Weber, Adam**
**Frankfurterstrasse 21**
**D-7120 Bietigheim-Bissingen (DE)**

(74) Vertreter: **Kübler, Rolf**
**Stuttgarter Strasse 119**
**D-7120 Bietigheim-Bissingen (DE)** ·

Courier Press, Leamington Spa, England.

## Stellantrieb für ein in mehrere Ruhelagen einstellbares bewegliches System

Die Erfindung betrifft einen Stellantrieb mit den Merkmalen des Oberbegriffs des Anspruchs 1.

Derartige Antriebseinheiten werden in der Automobilindustrie dazu benutzt, um eine Verstellung der Scheinwerfer in mindestens zwei Ruhelagen zu ermöglichen. Die Scheinwerfer werden dabei um eine horizontale Achse gekippt, die parallel zur Verbindungslinie der Scheinwerfer verläuft. Dadurch kann die Neigung der Scheinwerfer bezüglich des Fahrzeugs der jeweiligen Beladung angepaßt werden. Eine Blendung anderer Fahrzeugführer durch zu hoch eingestellte Scheinwerfer wird vermieden. Die Drehrichtung des Elektromotors ist bei einer solchen Verstelleinrichtung umkehrbar, so daß die Scheinwerfer, wenn Abblendung gewünscht ist, ohne Durchfahren der oberen Extremstellung nach unten gekippt werden können. Diese Maßnahme verhindert es, daß andere Verkehrsteilnehmer auch nur kurzzeitig geblendet werden.

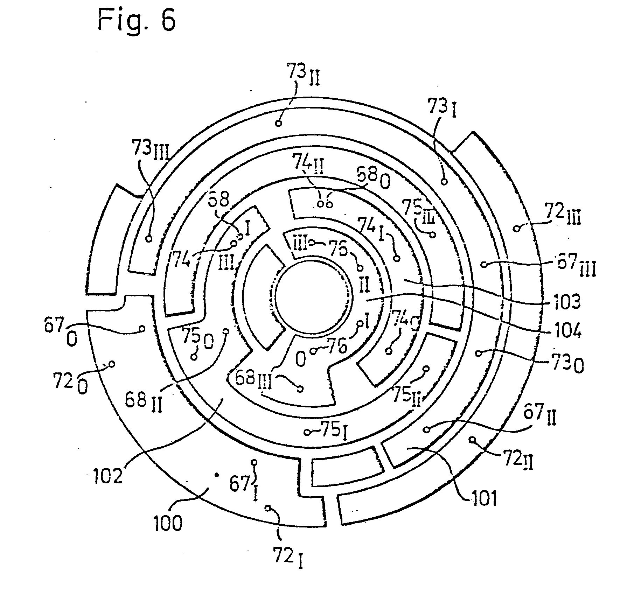

Bei einer aus der FR—A 23 21 404, Figur 6 bekannten Ausführung eines Stellantriebs zur Scheinwerferverkippung wird die Schaltscheibe vom Elektromotor in gleicher Weise wie das Abtriebsrad kontinuierlich mitbewegt. Die Schaltscheibe besteht aus einer kreisförmigen leitenden Region, die sich an einer Stelle sektorartig bis zum Rand der Schaltscheibe fortsetzt. Außerhalb der kreisförmigen leitenden Region befinden sich die einzelnen Kontakte der Positionsschalter, deren Zahl der Anzahl der gewünschten Scheinwerferruhelagen entspricht. Eine Anschlußklemme des Elektromotors ist immer mit der leitenden Region verbunden. Immer dann, wenn der Kontakt, der als einziger, durch die jeweilige Stellung eines Betriebsschalters bedingt, nicht mit der Spannungsquelle verbunden ist, auf dem sektorartigen Fortsatz aufschleift, wird der Stromkreis unterbrochen. Da die Schaltscheibe sich verhältnismäßig langsam dreht, sind Kontaktüberschneidungen notwendig, um einen sicheren Betrieb der Anlage zu gewährleisten. In bestimmten Stellungen der Schaltscheibe wird deshalb der leitende Fortsatz von zwei Kontakten berührt.

Aus wirtschaftlichen und produktionstechnischen Erwägungen heraus sind beide Motoren, die für die Bewegung der Scheinwerfer auf beiden Seiten des Fahrzeugs notwendig sind, parallel geschaltet, so daß die Anzahl der elektrischen Leitungen vom Armaturenbrett zu den Motoren gering gehalten werden kann.

Diese Parallelschaltung besitzt jedoch bei der bekannten Scheinwerfernivellieranlage den großen Nachteil, daß wegen der nötigen Kontaktüberschneidung eine Beeinflußung der elektrischen Steuerung der Motoren untereinander möglich ist. Vor allem bei verschiedenen Drehgeschwindigkeiten der beiden Motoren, die durch den Motor selbst oder durch unterschiedliche Gängigkeit des Bewegungsmechanismus oder der Scheinwerfer bedingt sein können, ist eine einwandfreie Funktion der Anlage nicht mehr gewährleistet. Im ungünstigsten Falle sind die Motoren nicht mehr außer Betrieb zu setzen.

Um Kontaktüberschneidungen, die derartig unangenehme Folgen haben können zu vermeiden, ist im Zusammenhang mit einer Schaltordnung, die eine weitere Reduzierung der Zuleitungen vom Betriebsschalter zu den Positionsschaltern zuläßt, gemäß einer nicht zum Stand der Technik gehörenden deutschen Patentanmeldung (DE—A 28 06 131) schon vorgeschlagen worden, die Positionsschalter als Schnappschalter auszubilden, die von Nocken gesteuert werden. Diese Nocken befinden sich auf einer vom Motor kontinuierlich mitgedrehten Schaltscheibe. Eine solche Schaltausführung zum schnellen Umschalten mit einzelnen Mikroschaltern und einer Schaltscheibe ist jedoch sehr aufwendig und somit teuer.

Aufgabe der Erfindung ist es deshalb, unter Beibehaltung der Vorteile, die ein Schnappschaltsystem bietet, die Herstellung der Positionsschalter wesentlich zu vereinfachen und damit kostengünstiger zu gestalten. Fehlsteuerungen der Anlage sollen weitgehend ausgeschlossen sowie die Kontaktgabe und Kontaktanordnung verbessert werden.

Diese Aufgabe wird durch einen Stellantrieb mit den Merkmalen aus dem kennzeichnenden Teil des Anspruchs 1 erfüllt.

Durch das Zusammenfassen mehrerer als Schnappschalter ausgebildeter Positionsschalter zu einem Schaltsystem, das nur aus der als Schnappscheibe arbeitenden Schaltscheibe und den elektrischen Kontakten besteht, wird eine wesentliche Verbilligung der Herstellungskosten eines derartigen Schaltsystems erreicht. Das Schnappverhalten der Schaltscheibe ermöglicht es außerdem, bei ohne Mikroschnappschalter arbeitenden Scheinwerferverstelleinrichtungen auf Kontaktüberschneidungen zu verzichten, so daß bei Parallelschaltung zweier Elektromotoren eine gegenseitige Beeinflußung ausgeschlossen ist.

Die Schaltscheibe ist ebenso wie bei Konstruktionen, die ihre kontinuierliche Drehung ermöglichen, vom Elektromotor bewegbar. Das Schnappverhalten der Schaltscheibe wird gemäß vorteilhaften Weiterbildungen der Erfindung auf folgende Weise erreicht:

Zu beginn der Bewegung des Elektromotors ist die Schaltscheibe durch eine Sperrvorrichtung an einer Drehung gehindert. Das Abtriebsrad vollführt deshalb eine Drehbewegung relativ zur Schaltscheibe. Dadurch wird eine Feder vorgespannt, die versucht, die Schaltscheibe mitzudrehen. Da der Winkelabstand von auf dem Abtriebsrad angebrachten Anlaufflächen etwa so groß ist wie der Abstand zweier möglicher Ruhelagen und die Sperrvorrichtung sich zu Beginn der Bewegung etwa in der Mitte zwischen den beiden Anlaufflächen befand, wird die Verriegelung der Schaltscheibe gelöst, wenn das Abtriebsrad die nächste mögliche Ruhelage erreicht, so daß die vorgespannte Feder die Schaltscheibe schlagartig nachstellen kann. Schaltscheibe und Abtriebsrad befinden sich relativ zueinander jetzt in derselben Lage wie beim Anschalten des Elektromotors. Die Schaltscheibe ist wieder verriegelt. Ist durch den Betriebsschalter die gerade erreichte Lage als Einstellung vorgewählt, so bleibt das Abtriebsrad jetzt stehen. Ist jedoch eine andere Einstellung gewünscht, so dreht sich das Abtriebsrad kontinuierlich weiter, während die Schaltscheibe ruht. Der weitere Vorgang läuft dann wie oben skizziert noch einmal ab.

Um die Möglichkeit auszuschließen, daß, weil der Betriebsschalter, über den vom Fahrer der ganze Stellantrieb gesteuert wird, mehrmals schnell hintereinander betätigt wurde, die Lage des beweglichen Systems nicht mit der Stellung des Betriebsschalters übereinstimmt, ist die Erfindung gemäß Anspruch 5 zweckmäßiger so weitergebildet, daß die Schaltscheibe und die Abtriebswelle unverdrehbar aneinander befestigt sind. Auch die Übergänge der Abtriebswelle und damit des gesamten beweglichen Systems von einer möglichen Ruhelage in die nächste besitzen also eine Schnappcharakteristik.

Dadurch ist sichergestellt, daß die Schaltscheibe und der Abtrieb in jedem Zeitpunkt eines Verstellvorganges einander entsprechende Positionen einnehmen. Es ist also z.B. unmöglich, daß das bewegte System eine ruhende Stellung nahe der Position II einnimmt, wenn der Betriebsschalter schnell von der Stellung I in die Stellung II und wieder zurück bewegt wurde.

Durch die Ausbildung gemäß Anspruch 5 ist der Stellantrieb so ausgelegt, daß sich nach einem derartigen Schaltvorgehen das bewegliche System noch in Stellung I, also der nach der Betätigung des Betriebsschalters der Stellung des Betriebsschalters entsprechenden Stellung befindet.

Die Anordung der Federelemente und der Sperrvorrichtung, die gemäß Anspruch 2 zur Schnappanordnung gehören, wird durch die umschnappende Abtriebswelle nur wenig modifiziert. Vorteilhafte Anordnungen und Ausgestaltungen dieser Teile sind den Unteransprüchen 6 bis 10 zu entnehmen.

Es ist vorteilhaft, die Schaltscheibe selbst mit Leiterbahnen zu versehen, auf denen die Federkontakte beim Umschnappen entlangschleifen. Die Leiterbahnen sind durch Isolierstücke in einzelne Bögen aufgeteilt und untereinander geeignet durch leitende Brücken miteinander verbunden, so daß Kontaktbahnen entstehen, über die leitende Verbindungen zwischen jeweils zwei Schleifkontakten hergestellt werden können.

Weitere Maßnahmen, die zur vorteilhaften Ausgestaltung der Erfindung getroffen werden, ermöglichen eine besonders einfache Anordnung der Kontaktbahnen auf der Schaltscheibe sowie ein sicheres und eindeutiges Schaltverhalten des gesamten Schnappschaltsystems.

Die Erfindung wird anhand der in der Zeichnung dargestellten Ausführungsbeispiele näher erläutert. Dabei werden auch die Vorteile einzelner erfindungsgemäßer Weiterbildungen deutlich.

Es zeigen:

Fig. 1 einen Schnitt durch eine erfindungsgemäße Ausbildung des Schnappschaltsystems,

Fig. 2 einen zum Schnitt aus Fig. 1 senkrechten Schnitt, der die Rastvorrichtung und den Entriegelungsmechanismus des Schnappschaltsystems aus Fig. 1 deutlich zeigt,

Fig. 3 eine Schaltordnung, deren Positionsschalter als Schnappschalter arbeiten,

Fig. 4 eine Kontaktbahn- und Federkontaktanordnung für eine Schaltung gemäß Fig. 3.

Fig. 5 eine andere vorteilhaftere Kontaktbahn- und Federkontaktanordnung für eine Schaltung gemäß Fig. 3,

Fig. 6 Kontaktbahnen gemäß Fig. 5, auf denen die Lage der Schleifkontakte in den verschiedenen stabilen Schaltstellungen verdeutlicht ist,

Fig. 7 einen Schnitt durch ein Ausführungsbeispiel bei dem Abtriebswelle und Schaltscheibe fest miteinander verbunden sind und zusammen umschnappen,

Fig. 8 einen Schnitt durch ein weiteres Ausführungsbeispiel gemäß Fig. 7 mit verrastbarer Kurvenscheibe und

Fig. 9 eine Draufsicht auf den Schnappmechanismus aus Fig. 8.

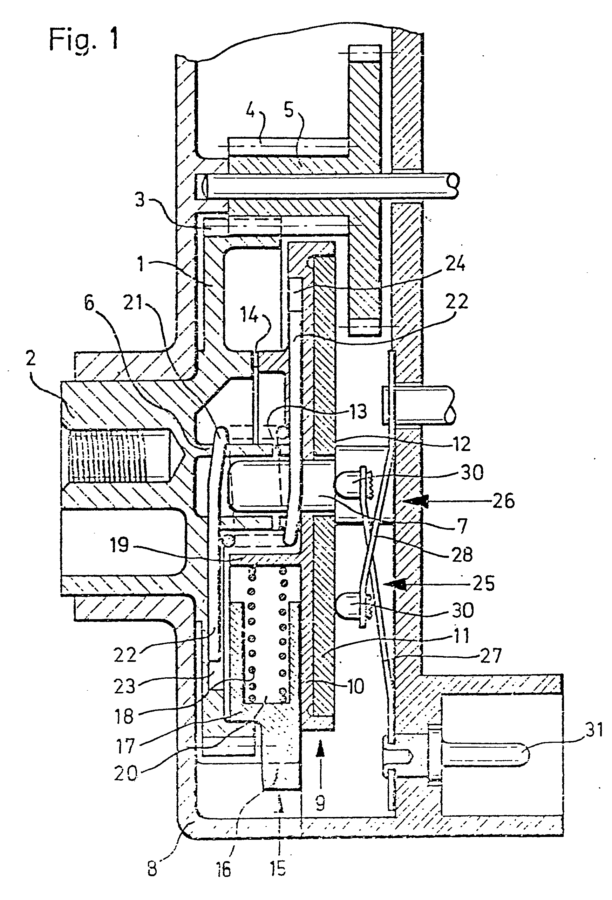

In dem in Fig. 1 gezeigten Ausführungsbeispiel ist das Abtriebsrad 1 als Zahnrad ausgebildet und mit der Abtriebswelle 2 aus einem Stück gegossen. Die Zähne 3 des Abtriebsrades 1 greifen in die Zähne 4 des Getriebezahnrades 5, so daß die Bewegung des Elektromotors auf die Abtriebswelle 2 übertragen werden kann. Durch die zylindrische Buchse 6 wird eine Nabe geschaffen, durch die das Abtriebsrad 1 auf dem Achsansatz 7 des Gehäuses 8 gelagert ist. Auf dem Achsansatz 7 sitzt außerdem die Schaltscheibe 9, die aus einer Platte 10 und der kreisförmigen Platine 11 besteht. Die Schaltscheibe 9 befindet sich zwischen den Anlegeflächen 12, 13 und 14 und ist so gegen axiale Verschiebungen gesichert.

An der Platte 10 der Schaltscheibe 9 ist eine Sperrvorrichtung 15 angebracht, die aus dem beweglichen Sperrbolzen 16 mit der Schulter 17 und der Druckfeder 18 besteht.

Die Druckfeder 18 stützt sich auf dem Sockel 19 und am Ende einer Bohrung 20 des Sperrbolzens 16 ab und versucht diesen in radialer Richtung nach außen zu bewegen. Abtriebsrad 1 und Schaltscheibe 9 sind durch die Schraubenfeder 21 miteinander wirkverbunden. Die Schraubenfeder 21 umschließt die Buchse 6. Ihre Enden 22 liegen in den Nuten 23 und 24 am Abtriebsrad 1 und an der Platte 10 fest.

Die Platine 11 wird von Schleifkontakten beaufschlagt, von denen in Fig. 1 zwei, 25 und 26, eingezeichnet sind. Diese bestehen im wesentlichen aus Blattfedern 27 und 28, die bei diesem Ausführungsbeispiel verschieden lang sind. Die Blattfedern 27 und 28 sind mit ihrem einen Ende am Gehäuse 8 befestigt und tragen an ihrem freien Ende je eine Kontaktperle 30, die die Platine 11 berührt.

Mit Hilfe von Steckern 31, von denen einer in der Zeichnung sichtbar ist, können die Schleifkontakte mit den anderen Elementen der Anlage verkabelt werden.

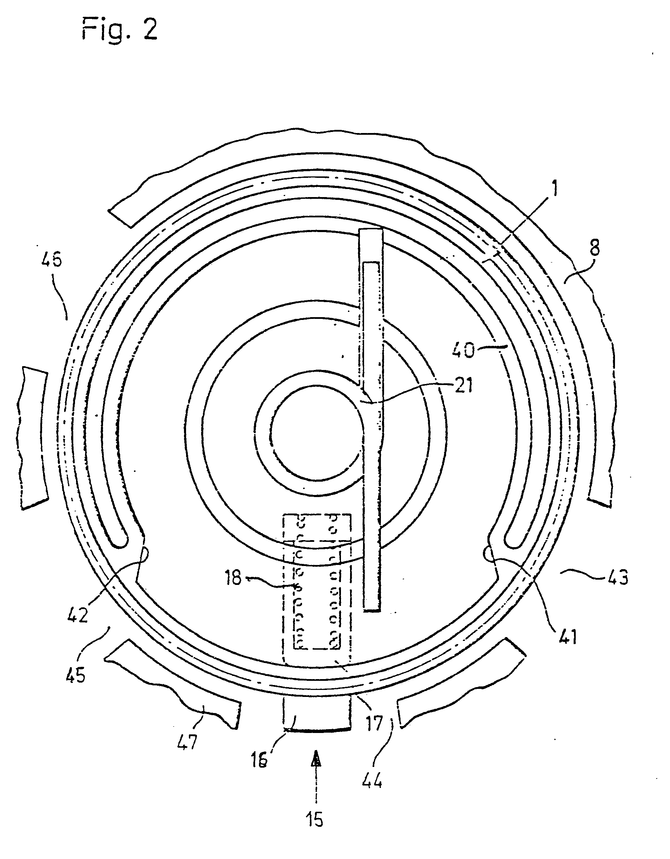

Anhand von Fig. 2 soll nun näher erläutert werden, wie das Schnappverhalten der Schaltscheibe erreicht wird. Die Fig. 2 zeigt wieder die Sperrvorrichtung 15, die Schraubenfeder 21 sowie das Abtriebsrad 1 der Fig. 1. Zusätzlich sind jedoch ein Schaltnocken 40 mit den beiden Anlaufflächen 41 und 42 und die Ausnehmungen 43, 44, 45 und 46 des Gehäuses 8 sichtbar. Die Ausnehmungen sind breiter als der Sperrbolzen 16, so daß ein sicheres Einrasten des Sperrbolzens 16 gewährleistet ist.

Der Stellantrieb möge sich in der dargestellten Lage gerade in Ruhe befinden. Wenn jetzt der Motor eingeschaltet wird, dann fängt das Abtriebsrad 1 an sich zu drehen. Über die Schraubenfeder 21 wird auch die Schaltscheibe mitgenommen, bis der Sperrbolzen gegen den Gehäusevorsprung 47 stößt. Dadurch wird ein Weiterdrehen der Schaltscheibe verhindert. Das Antriebsrad dagegen bewegt sich weiter, so daß sich die Anlauffläche 41 dem Sperrbolzen 16 nähert und die Schraubenfeder 21 vorgespannt wird. Schließlich greift die Anlauffläche 41 an der Schulter 17 des Sperrbolzens 16 an und zieht diesen gegen die Kraft der Druckfeder 18 zurück, so daß der Gehäusevorsprung 47 kein Hindernis mehr für die Bewegung der Schaltscheibe darstellt.

Die vorgespannte Schraubenfeder 21 kann sich deshalb entspannen und bewirkt dabei ein schlagartiges Umschnappen der Schaltscheibe. Der Sperrbolzen 16 greift, nachdem er den Gehäusevorsprung 47 überwunden hat, in die Ausnehmung 45 ein. Schaltscheibe und Abtriebsrad 1 befinden sich relativ zueinander in derselben Lage wie zu Beginn der Bewegung, so daß sich, falls gewünscht, derselbe eben beschriebene Vorgang wiederholen kann.

Ändert sich die Drehrichtung des Elektromotors, so läuft auch das Abtriebsrad 1 in die andere Richtung. An der Schulter 17 des Sperrbolzens 16 greift dann die Anlauffläche 42 des Schaltnockens 40 an. Das Prinzip des Umschaltvorganges bleibt jedoch genau dasselbe.

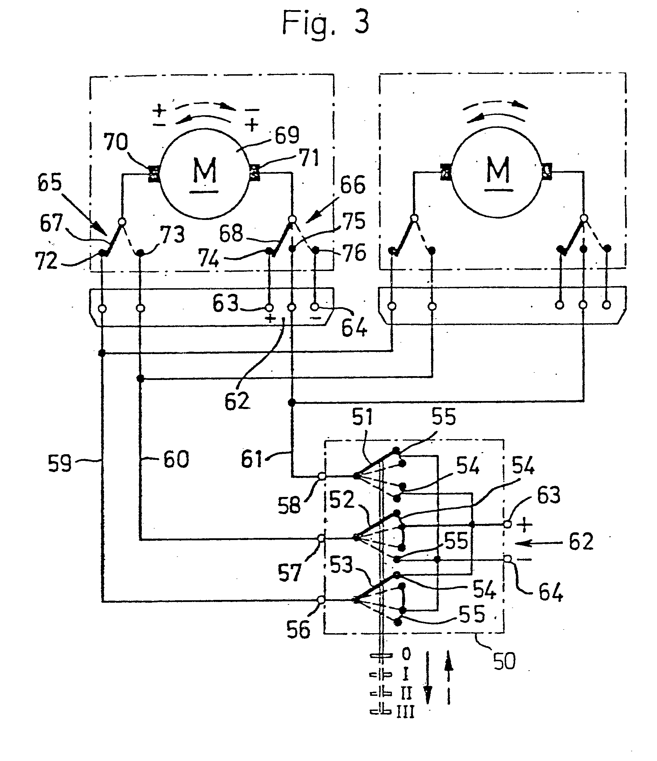

Eine erfindungsgemäße, umschnappende Schaltscheibe eignet sich in besonderer Weise für eine Verwendung in einer Schaltanordnung gemäß Fig. 3. Die Hauptteile dieser Schaltanordnung sind der Betriebsschalter 50, die Positionsschalter 65 und 66, der Elektromotor 69 und die Spannungsquelle 62. Ein zweiter Elektromotor ist parallel zum ersten geschaltet. Da dies jedoch keinerlei Bedeutung für die Grundzüge der vorliegenden Schaltanordnung besitzt, wird der zweite Elektromotor in den weiteren Ausführungen außer Betracht gelassen.

Der Betriebsschalter 50 ist in insgesamt 4 verschiedene Schaltstellungen umschaltbar. Er besteht im wesentlichen aus 3 Kontaktbrücken 51, 52 und 53, von denen jeweils eine bei einem Umschalten von einer Stellung in eine benachbarte vom einen Pol der Spannungsquelle 62 an den anderen gelegt wird. Für jede Kontaktbrücke sind dazu vier Festkontakte 54 und 55 vorhanden, die entweder am Plus- 63 oder Minuspol 64 der Spannungsquelle 62 angeschlossen sind. Über die Ausgänge 56, 57 und 58 und die Leitungen 59, 60, 61 sind die Kontaktbrücken mit den Positionsschaltern 65 und 66 verbunden. Der bewegliche Umschaltkontakt 67 kann entweder auf den Ausgang 56 oder 57, der bewegliche Umschaltkontakt 68 auf den Ausgang 58 des Betriebsschalters 50 oder den Plus- 63 oder Minuspol 64 der Spannungsquelle 62 geschaltet werden. Durch den Umschaltkontakt 67 wird der Anschluß 70, durch den Umschaltkontakt 68 der Anschluß 71 des Elektromotors 69 angesteuert.

Wird ausgehend von der gezeigten Ruhestellung der Betriebsschalter 50 in die Schaltstellung 1 umgestellt, ändert sich nur das Potential am Ausgang 56.

Der Elektromotor 69 dreht sich, bis nach einem Verstellwinkel von 60° der bewegliche Umschaltkontakt 68 des Positionsschalters 66 auf den mittleren Festkontakt 75 umgestellt wird, der über die Leitung 61 und die Kontaktbrücke 51 mit Masse verbunden ist. Der Elektromotor wird abgebremst. In der Schaltstellung II des Betriebsschalters 50 ändert sich über die Kontaktbrücke 51 das Potential am Ausgang 58, der Bremsstromkreis wird aufgehoben, und der Elektromotor 69 läuft in gleicher Drehrichtung bis der Schaltkontakt 67 des anderen Positionsschalters 65 auf den Festkontakt 73 umspringt. Dieser liegt über die Leitung 60 am Ausgang 57 und über die Kontaktbrücke 52 auf positivem Potential. Der Elektromotor ist wieder kurzgeschlossen.

Nach Umschalten des Betriebsschalters 50 auf Stellung III dreht sich der Elektromotor weiter, bis der Umschaltkontakt 68 mit dem Festkontakt 76 verbunden wird. Der Betriebsshalter kann auch sofort von der Stellung 0 in die Stellung III geschaltet werden, ohne daß die sichere Funktion der Schaltanordung geschmälert wird. Bei Umschaltung von

Stellung III auf Stellung 0 wird nach einer Drehung von 60° der Umschaltkontakt 68 auf den Festkontakt 75, nach weiteren 60° der Umschaltkontakt 67 auf den Festkontakt 72 und schließlich noch einmal der Umschaltkontakt 68 auf den Festkontakt 74 umgestellt. Damit ist die Ausgangsposition wieder erreicht.

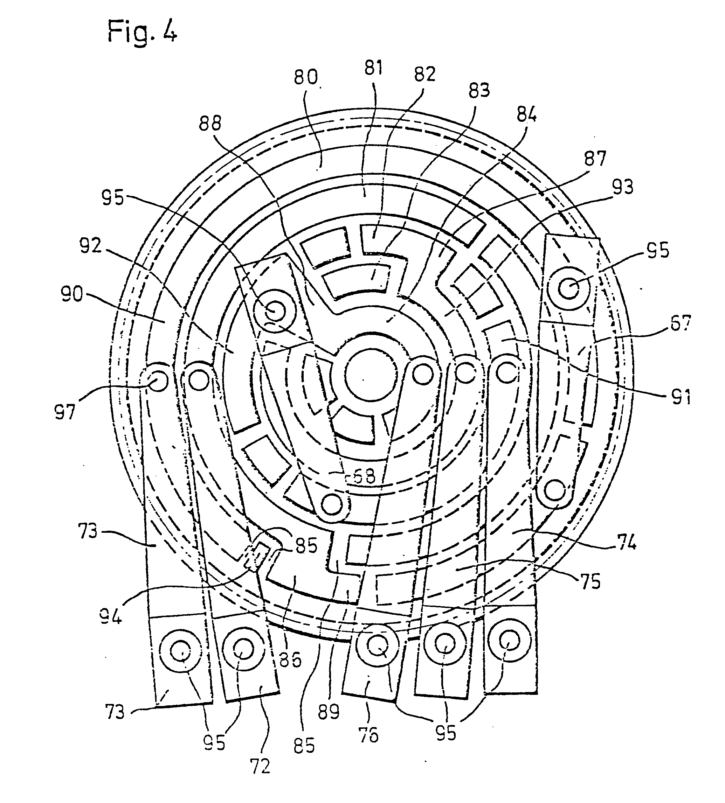

Durch die Anordnung der Kontaktbahnen und Schleifkontakte auf der umschnappenden Schaltscheibe nach Fig. 4, sind die Positionsschalter, wie sie für die Schaltung aus Fig. 3 nötig sind, zu realisieren.

Da insgesamt fünf Zuleitungen vom Betriebsschalter 50 und vom Plus- 63 und Minuspol 64 vorhanden sind, ist die leitende Schicht auf der Platine 11 in fünf Kreisringe 80, 81, 82, 83 und 84 eingeteilt.

Auf dem Kreisring 80 schleift der Festkontakt 73, auf dem Kreisring 81 der Festkontakt 72. Der Kreisring 80 wird außerdem noch vom Umschaltkontakt 67 beaufschlagt. Die Festkontakte 74, 75 und 76 des Positionsschalters 66 liegen auf den Kreisringen 82, 84 und 83. Der zugehörige Umschaltkontakt 68 schleift auf dem Kreisring 82. Alle Kontaktfedern sind durch Halterungen 95 am Gehäuse befestigt.

Durch Isolierkörper 85 und leitende Brücken 86, 87 und 88 sind aus den Kreisringen fünf Kontaktbahnen 89, 90, 91, 92 und 93 entstanden.

Durch die besondere Anordnung der Kontaktbahnen, die dadurch sehr vereinfacht wird, daß die zu einem Umschaltkontakt gehörenden Festkontakte auf benachbarten Kreisringen schleifen, ist gewährleistet, daß in jeder stabilen Schaltstellung der Schaltscheibe die Umschaltkontakte 67 und 68 mit den gewünschten Festkontakten über zwei Kontaktbahnen verbunden sind. Die Entfernung von zu verschiedenen Kontaktbahnen gehörenden und voneinander isolierten Ringstücken eines Kreisringes ist größer als der Durchmesser der von einer Kontaktperle 30 berührten Fläche, so daß ein Schleifkontakt beim Umschnappen nie zwei Kontaktbahnen gleichzeitig berühren kann. Auf dem Kreisring 80 zum Beispiel ist die Kontaktbahn 90 von dem auf dem Kreisring 80 liegenden Teil der Kontaktbahn 89 durch zwei Isolierkörper und ein durch sie isoliertes, niemals Strom führendes Stück 94 aus leitendem Material getrennt. Durch diese Maßnahme wird das Schaltverhalten des als Positionsschalter dienenden Schnappschaltsystems weiter verbessert.

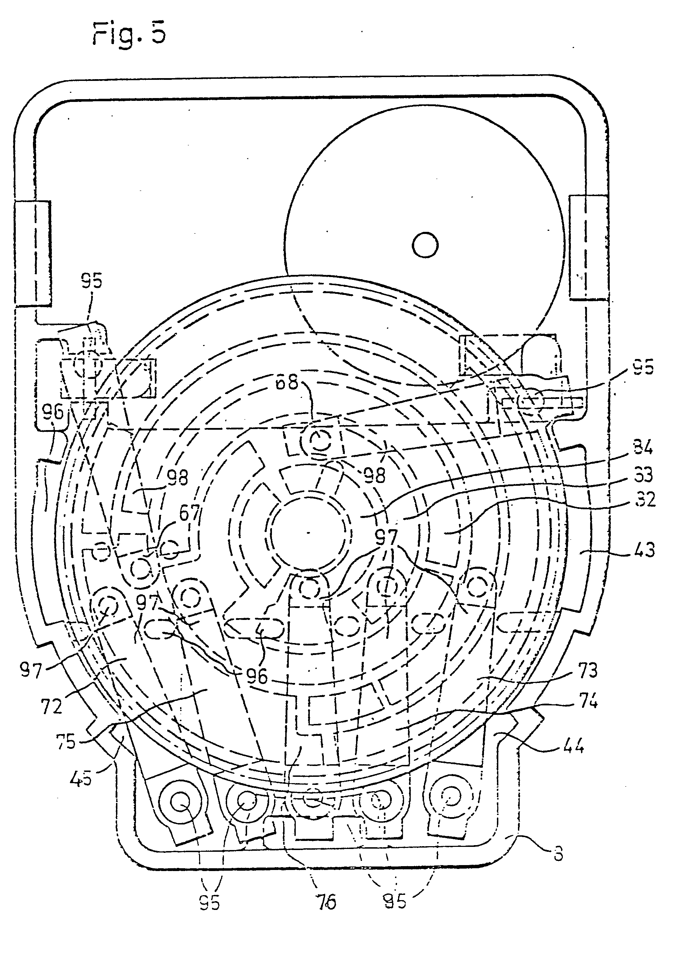

Durch die in Fig. 5 gezeigte Schleifkontaktordnung kann das Schnappschaltsystem noch günstiger gestaltet werden. Benachbarte Kreisbahnen werden dort auf verschiedenen Halbflächen der Schaltscheibe von den schleifenden Festkontakten 72 bis 76 beaufschlagt, so daß zwischen ihnen noch genügend Platz vorhanden ist, um Distanzstücke 96 am Gehäuse 8 anzubringen, die die Kontaktfedern 97 auf Abstand halten und ihnen eine gewisse Führung geben. Auch die Kontaktfedern 98 der Umschaltkontakte 67 und 68 werden so geführt wie die Kontaktfedern 97.

Durch diese Maßnahmen können die Anforderungen an die Halterungen 95 gemindert werden, ohne daß die Gefahr des Kurzschlusses zwischen zwei Kontakten besteht.

Der Umschaltkontakt 68 schleift auf dem mittleren der zu seiner Gruppe gehörenden Kreisringe 82, 83, 84. Die Differenz der Anzahlen von innerhalb und außerhalb von ihm liegenden und zu seiner Gruppe gehörenden Kreisringe ist also in diesem Falle null, da die Gruppe eine ungerade Anzahl von Kreisringen umfaßt. Dadurch wird vermieden, eine leitende Brücke über zwei Kreisringe schaffen zu müssen, so daß die Anordnung der Kontaktbahnen weiter vereinfacht wird, und sich die Sicherheit der Schaltvorgänge erhöht.

Anhand von Fig. 6 sollen nun die Umschaltvorgänge während einer Drehung des Abtriebsrades von einer Ruhelage, die der Stellung 0 des Betriebsschalters, zu einer, die der Stellung III entspricht, und wieder zurück erläutert werden.

Die Anordnung der Kontaktbahnen 100, 101, 102, 103, 104 entspricht der aus Fig. 5. Die Lagen der Schleifkontakte sind mit kleinen Kreisen gekennzeichnet. Das ganze System ruhe gerade in der Stellung 0. Die Schleifkontakte befinden sich in den mit dem Index 0 angedeuteten Lagen.

Der Umschaltkontakt 67 ist also mit dem Festkontakt 72 über die Kontaktbahn 100, der Umschaltkontakt 68 mit dem Festkontakt 74 über die Kontaktbahn 103 verbunden. Beide Klemmen des Motors liegen am Pluspol der Spannungsquelle.

Nach Umschaltung des Betriebsschalters in Stellung I setzt sich der Motor und mit ihm das Abtriebsrad in Bewegung. Bei Erreichen der Ruhelage I schnappt die Schaltscheibe im Uhrzeigersinn um 60° weiter, so daß die Schleifkontakte an den mit I indizierten Stellen die Kontaktbahnen berühren. Während sich zwischen den Kontakten 67 und 72 nichts geändert hat, ist der Umschaltkontakt 68 jetzt über die Kontaktbahn 102 mit dem Festkontakt 75 verbunden.

Nach dem nächsten Umschnappen, wenn die Kontakte die mit II indizierten Lagen einnehmen, sind die Kontakte 67 und 72 getrennt, während zwischen dem Kontakt 68 und 75 über die Kontaktbahn 102 weiterhin eine Verbindung besteht. Der Umschaltkontakt 67 liegt jetzt zusammen mit dem Festkontakt 72 auf der Kontaktbahn 101.

In der Ruhelage III schließlich ist zwischen den Kontakten 68 und 76 über die Kontaktbahn 104 und weiterhin zwischen den Kontakten 76 und 73 über die Kontaktbahn 101 eine leitende Verbindung gegeben.

Falls wieder die Stellung 0 des durch den Elektromotor bewegten Systems gewünscht wird, wird der Betriebsschalter auf 0 gesetzt. Die Drehung des Motors und des Abtriebsrades ist umgekehrt, so daß die Schaltscheibe jetzt entgegen dem Uhrzeigersinn umschnappt. Nach Drehung des Abtriebsrades um 60° nehmen die Kontakte die mit II indizierten Lagen ein und kehren zuletzt über die Langen I in die Anfangslagen O zurück.

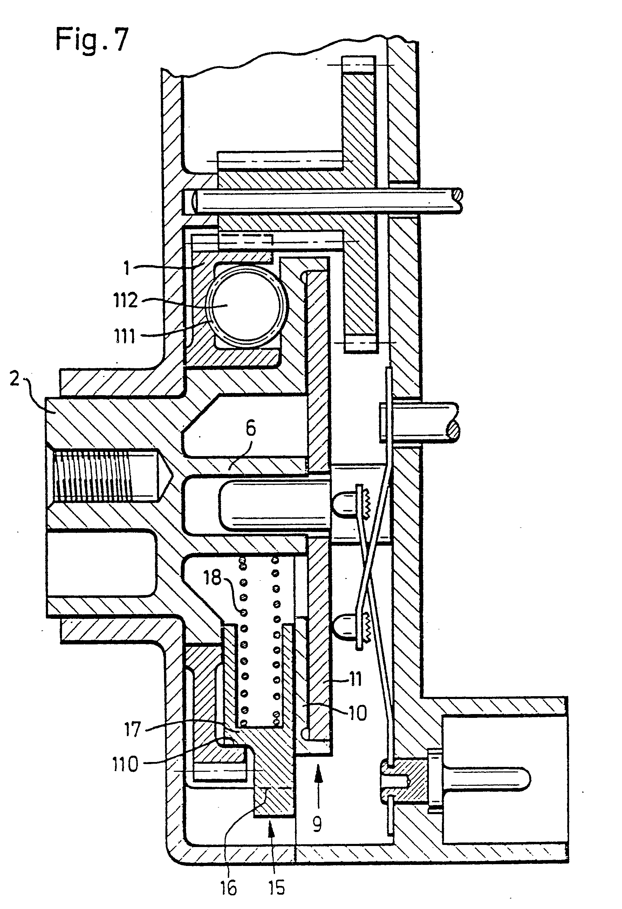

Bei den Ausführungsbeispielen aus den Fig. 7 bis 9 schnappt nicht nur die Schaltscheibe 9 von einer stabilen Lage in die nächste, sondern auch die Abtriebswelle 2. Wie in den Fig. 1 und 2 wird von einem nicht dargestellten Elektromotor über Untersetzungsstufen das Abtriebsrad 1 angetrieben, das drehbar auf der Abtriebswelle 2 gelagert ist. Jenseits des Abtriebsrads 1 weitet sich die Abtriebswelle 2 flanschartig zu einer scheibenförmigen Platte 10 aus, auf der unverdrehbar die Platine 11 mit den Kontaktbahnen sitzt. Abtriebswelle 2 und Platte 10 bestehen also jetzt aus einem Stück.

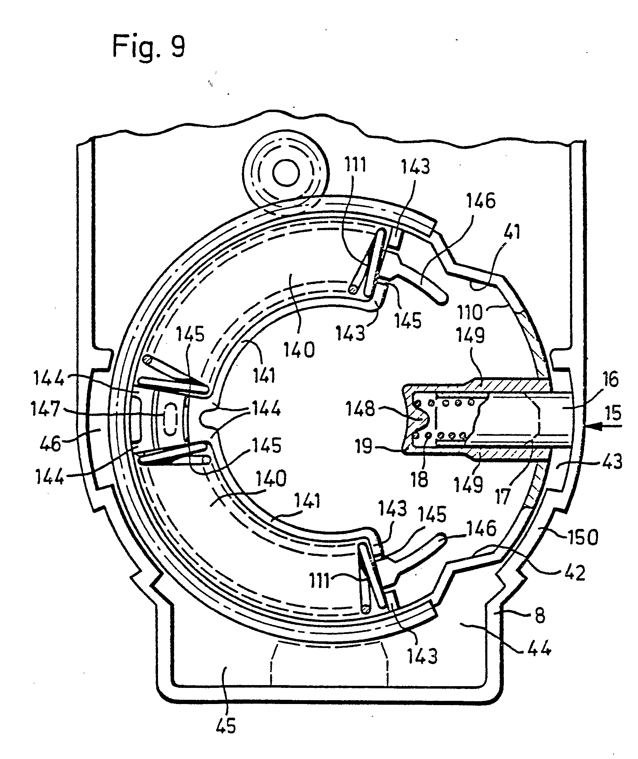

Die Sperrvorrichtung 15, die dieselben Teile wie in den Fig. 1 und 2 aufweist, nämlich den Sperrbolzen 16 mit der Schulter 17 und die Druckfeder 18, befindet sich an der durch die Abtriebswelle 2 und die Platte 10 gebildeten Einheit. Durch die Druckfeder 18, die sich in Fig. 7 an der Buchse 6 der Abtriebswelle und in der Fig. 9 am Sockel 19 der Platte 10 abstützt, wird die Schulter 17 an eine Kurvenfläche 10 des Abtriebsrades 1 gedrückt.

Das Ausführungsbeispiel aus Fig. 7 besitzt als Federelement, das durch die Bewegungen des Abtriebsrads 1 und der umschnappenden Teile 2 und 9 relativ zueinander vorgespannt und entspannt wird, eine einzige Schraubenfeder 111, die ringförmig in einer Aufnahme 112 des Abtriebsrades 1 liegt und an beiden Enden sowohl vom Abtriebsrad 1 als auch von nicht sichtbaren Ansätzen der Platte 10 beaufschlagt wird.

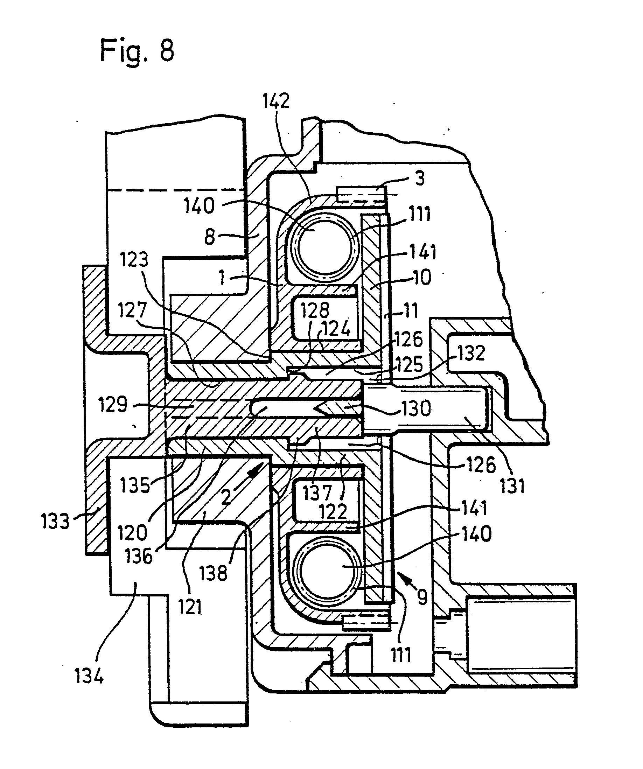

Die Funktionsweise des Ausführungsbeispiels aus Fig. 7 wird noch bei der Beschreibung des Ausführungsbeispiels aus den Fig. 8 und 9 deutlich werden. Dieses weist eine hohlzylindrisch ausgebildete Abtriebswelle 2 auf, die sich ebenfalls flanschartig zu einer Platte 10 ausweitet, die wiederum die Platine 11 trägt.

Die Welle 2 weist im wesentlichen drei Abschnitte auf. Mit einem ersten Hohlzylinder 120 ist sie in einer Buchse 121 des Gehäuses 8 auf der einen Seite gelagert. Daran schließt sich nach innen ein zweiter Hohlzylinder 122 an, der einen größeren Außendurchmesser besitzt als der Hohlzylinder 120. Dadurch wird eine Stufe 123 gebildet, die am Gehäuse 8 anliegt und die Abtriebswelle 2 gegen eine Verschiebung in die eine Richtung sichert. Auf dem Außenmantel 124 des Hohlzylinders 122 sitzt drehbar das Abtriebsrad 1. Der Innenmantel 125 des Hohlzylinders 122 ist an zwei gegenüberliegenden Stellen 126 gegenüber dem Innenmantel 127 des Hohlzylinders 120 zurückgesetzt, so daß auch dort je eine Stufe 128 entsteht. Um 90° gegenüber den besagten Stellen 126 versetzt, ist an die dort stufenlos ineinander übergehenden Innenflächen 125 und 127 der Hohlzylinder 120 und 122 eine Leiste 129 angeformt, die in das Innere der Hohlzylinder ragt, jedoch höchstens soweit, daß sie die zurückgesetzten Stellen 126 nicht überdeckt. Am Ende des Hohlzylinders 122 verbreitert sich die Leiste 129 bis auf die gegenüberliegende Seite des Hohlzylinders.

Dadurch entsteht der Steg 130, der sich etwa in Höhe der Platte 10 zu einem kreisrunden Zapfen 131, dem dritten Wellenabschnitt, vergrößert.

Dieser ist auf seinem Anfangsstück nur auf der Seite, an der die Leiste 129 liegt, und an der gegenüberliegenden Seite mit der Platte 10 verbunden, so daß durch die Öffnungen 132 die Stufen 128 entformt werden können. Der Zapfen 131 weist über die Platte 10 und die Platine 11 hinaus und steckt drehbar in einer Aufnahme des Gehäuses 8.

Eine Kurvenscheibe 133, über die das Verbindungselement 134 verstellt werden kann, greift mit einem zylindrischen Ansatz 135 in die Hohlwelle 2 ein, der eine Nut aufweist, in die die Leiste 129 paßt. Dadurch ist sichergestellt, daß die Kurvenscheibe 133 immer in derselben Lage zur Abtriebswelle 2 montiert wird. Etwa auf halbem Wege vertieft sich die Nut bis zur gegenüberliegenden Seite des Ansatzes 135, so daß der Durchbruch 136 und die beiden federnden Schenkel 137 entstehen, die die hinter die Stufen 128 greifenden Rastnasen 138 besitzen. In den Durchbruch 136 ragt der Steg 130 der Abtriebswelle 2, der die Schenkel 137 sichert.

Im Abtriebsrad 1 sind diesmal zwei Aufnahmen 140 für zwei Schraubenfedern 111 gebildet. Die Aufnahmen werden in radialer Richtung innen durch Stege 141 und außen durch den Rand 142 des Abtriebsrades 1 abgeschlossen, der auf seiner Außenseite den Zahnkranz 3 trägt.

Wie aus Fig. 9 hervorgeht, sind die Aufnahmen 140 stirnseitig durch an die Stege 141 und den Rand 142 angeformte Lappen 143 und 11 begrenzt. Zwischen den sich gegenüberstehenden Lappen ist jeweils eine Lücke 145 freigelassen, durch die hindurch die in Fig. 9 nicht gezeichnete Platte 10 mit den Ansätzen 146 und dem Ansatz 147 die Schraubenfedern 111 beaufschlagt. Die Schraubenfedern 111 und die verschiedenen Ansätze, an denen sie sich abstützen, befinden sich am Abtriebsrad 1 und an der Platte 10 möglichst weit entfernt von der Drehachse dieser Teile, so daß der für die Drehmomente wirksame Hebelarm möglichst lang ist. Außerdem bietet eine Anordnung der Federn, bei der diese an beiden Enden sowohl von einem kontinuierlich bewegten Teile als auch von einem umschnappenden Teil beaufschlagt werden, den besonderen Vorteil, die Federn so einzubauen, daß sie auch bei ruhender Stelleinrichtung schon unter einer gewissen Vorspannung stehen. Dadurch können sie größere Kräfte ausüben. Dies ist in den Ausführunsbeispielen aus den Fig. 7 bis 9 realisiert.

Die Platte 10 aus Fig. 8 weist außerdem den Sockel 19 mit dem Dorn 148 und die Führungen 149 auf, in denen der Sperrbolzen 16 verschiebarr ist. Die Druckfeder 18 bewirkt, daß dieser mit seiner Schulter 17 auf der Kurvenfläche 110 des Abtriebsrades 1 aufliegt und selbst in eine der Ausnehmungen 43, 44, 45 oder 46 am Gehäuse 8 hineinragt. In der gezeigten Lage ist es die Ausnehmung 43. Die Kurvenfläche 110 weist über weite Bereiche gleichen Radius auf, an ihren beiden Enden geht sie jedoch in zwei ansteigende Anlaufflächen 41 und 42 über.

Die Funktionsweise der in den Fig. 7 bis 9 dargestellten Ausführungsbeispiele ist ähnlich der des in den Fig. 1 und 2 gezeigten. Wenn der Motor beginnt, das Abtriebsrad 1 im Uhrzeigersinn zu drehen, wird über die Ansätze 143 und 144, die Schraubenfedern 111 und die Ansätze 146 und 147 diese Drehung auf die Platte 10 und die Abtreibswelle 2 übertragen, die sich mitbewegen, bis der Sperrbolzen 16 gegen den Gehäusevorsprung 150 stößt. Da damit die Bewegung der Platte 10 gestoppt ist, das Abtriebsrad 1 sich jedoch weiterdreht, werden die Schraubenfedern 111 zusammengedrückt. Die Anlauffläche 41 nähert sich der Schulter 17 des Sperrbolzens 16. Schließlich greift die Anlauffläche 41 am Sperrbolzen 16 an und zieht diesen gegen die Kraft der Druckfeder 18 zurück, so daß der Gehäusevorsprung 150 kein Hindernis mehr für die Bewegung der Platte 10 mit der Platine 11 und der Abtriebswelle 2 darstellt. Die Schraubenfedern 111 können sich deshalb entspannen und bewirken dabei über die Ansätze 146 und 147 ein schlagartiges Umschnappen der Platte 10 und der Abtriebswelle 2 mit der Kurvenscheibe 133.

Der Sperrbolzen 16 greift, nachdem er den Gehäusevorsprung 150 überwunden hat, in die Ausnehmung 44 ein.

Weitere Übergänge in dieselbe Richtung laufen auf genau dieselbe Weise ab, wie es eben beschrieben wurde. Bei umgekehrter Verstellrichtung wird anstelle der Anlauffläche 41 die Anlauffläche 42 wirksam. Das Umschaltprinzip ist jedoch genau dasselbe.

Die anhand der Ausführungsbeispiele beschriebene Funktionsweise eines erfindungsgemäßen Stellantriebs mit umschnappender Schaltscheibe und den erfindungsgemäßen Weiterbildungen macht deutlich, daß damit ein Stellantrieb geschaffen ist, der einen einwandfreien und sicheren Betrieb zu jeder Zeit gewährleistet.

Es ist so auch für jedermann leicht einsichtig, daß die Verwendung einer umschnappenden Schaltscheibe mit den vorteilhaften Ausgestaltungen nicht nur dort große Vorteile mit sich bringt, wo ein billig herzustellender, von Kontaktüberschneidungen und Fehlsteuerungen freier Umschalter erforderlich ist, sondern auch dann das Schaltverhalten wesentlich verbessert, wenn in Grundsatz auch eine kontinuierlich bewegte Schaltscheibe benutzt werden kann.

## Patentansprüche

1. Stellantrieb für ein in mehrere Ruhelagen einstellbares bewegliches System, insbesondere für die stufenweise Einstellung der Neigung von Kraftfahrzeugscheinwerfern mit einem Getriebe (1, 5), einem Elektromotor (69) und einer von diesem über einen Koppelmechanismus (1, 5, 15, 21, 40; 111) geschleppten Schaltscheibe (9), die zusammen mit unterschiedlich ansteuerbaren elektrischen Festkontakten (72, 73, 74, 75, 76) mehrere Positionsschalter bildet und, wenn die erwünschte Ruhelage des beweglichen Systems erreicht ist, eine Abschaltung des Elektromotors (69) erwirkt, dadurch gekennzeichnet, daß der Koppelmechanismus (1, 5, 15, 21, 40; 111) die Schaltscheibe (9) mit intervallartigen Schnappbewegungen von Schaltstellung zu Schaltstellung der Positionsschalter (9, 72, 73, 74, 75, 76) schleppt, wobei die Nachschnappbewegung dann erfolgt, wenn der Elektromotor (69) eine der nächsten Schaltstellung zugeordnete Position erreicht.

2. Stellantrieb nach Anspruch 1, dadurch gekennzeichnet, daß die Schnappanordung wenigstens ein Federelement (21, 111), das durch die Bewegung des Elektromotors zwischen zwei benachbarten Ruhelagen des beweglichen Systems zugeordneten Positionen spannbar ist, und eine Sperrvorrichtung (15) aufweist, mit deren Hilfe die Schaltscheibe (9) in den stabilen Schaltstellungen verriegelbar ist, und daß die Verriegelung in den Positionen des Elektromotors, die Ruhelagen des beweglichen Systems entsprechen, lösbar ist und die Schaltscheibe (9) mit Hilfe des vorgespannten Federelements (21, 111) dann in die nächste stabile Schaltstellung bringbar ist.

3. Stellantrieb nach Anspruch 2, dadurch gekennzeichnet, daß die Sperrvorrichtung (15) aus einem in einer Führung (149) liegenden Sperrbolzen (16), der mit einer Schulter (17) versehen und in radialer Richtung verschiebbar ist, und einer Feder (18) besteht, die den Sperrbolzen (16) in Ausnehmungen (43, 44, 45, 46) drückt.

4. Stellantrieb nach Anspruch 3, dadurch gekennzeichnet, daß ein kontinuierlich bewegtes Abtriebsrad (1) zwei Anlaufflächen (41, 42) aufweist, deren Winkelabstand etwa doppelt so groß ist wie der vom Abtriebsrad (1) bei der Bewegung zwischen zwei benachbarten Stellungen des beweglichen Systems entsprechenden Positionen überstrichene Winkel und von denen in besagten Positionen je nach Bewegungsrichtung des Elektromotors die eine oder die andere an der Schulter (17) des Sperrbolzens (16) so angreift, daß dieser aus der Ausnehmung (43, 44, 45, 46), in die er gerade ragt, gegen die Kraft der Feder (18) zurückgeschoben wird.

5. Stellantrieb nach einem der Ansprüche 1 bis 4, dadurch gekennzeichnet, daß die Abtriebswelle (2) und die Schaltscheibe (9) unverdrehbar aneinander befestigt sind und eine umschnappende Einheit bilden.

6. Stellantrieb nach einem der Ansprüche 2 bis 5, dadurch gekennzeichnet, daß die Sperrvorrichtung (15) an den umschnappenden Teilen (2,9) des Stellantriebs gehalten ist.

7. Stellantrieb nach einem der Ansprüche 2 bis 6, dadurch gekennzeichnet, daß das Abtriebsrad (1) und die umschnappende Teile (2, 9) durch die Federelemente (21, 111) wirkverbunden sind, die durch die Bewegung des Abtriebsrads (1) und der umschnappenden Teile (2 und/oder 9) relative zueinander spannbar und entspannbar sind.

8. Stellantrieb nach einem der Ansprüche 2 bis 7, dadurch gekennzeichnet, daß die Federelemente (111) an beiden Enden sowohl von einem kontinuierlich bewegten Teil (1) als auch von einem umschnappenden Teil (9) beaufschlagt werden und auch bei ruhender Stelleinrichtung vorgespannt sind.

9. Stellantrieb nach Anspruch 7, dadurch gekennzeichnet, daß das Federelement eine Schraubenfeder (21) ist, die mit ihren Windungen einen konzentrisch zur Drehachse der Schaltscheibe (9) und des Abtriebsrads (1) liegenden, zylinderischen Körper (6) umschließt und sich an einem umschnappenden Teil (9) abstützt.

10. Stellantrieb nach Anspruch 7 oder 8, dadurch gekennzeichnet, daß wenigstens eine Schraubenfeder (111) konzentrisch zur gemeinsamen Drehachse von Abtriebswelle (2), Abtriebsrad (1) und Schaltscheibe (9) angeordnet ist, daß jedes Ende der vorhandenen Schraubenfedern (111) sowohl vom Abtriebsrad (1) als auch von einem umschnappenden Teil (10) beaufschlagbar ist und daß die Anschläge (146, 147) mit denen die Schaltscheibe (9) die Schraubenfedern (111) beaufschlagt, und die Schraubenfeder (111) in der Nähe des Randes der Schaltscheibe (9) liegen.

11. Stellantrieb nach wenigstens einem der vorhergehenden Ansprüche, dadurch gekennzeichnet, daß auf die Schaltscheibe (9) eine durch die Anzahl der Positionsschalter bedingte Zahl von gegeneinander isolierten Leiterbahnen (80, 81, 82, 83, 84) aufgebracht sind, auf denen Schleifkontakte (72, 73, 74, 75, 76) beim Umschnappen der Schaltscheibe (9) entlangschleifen.

12. Stellantrieb nach Anspruch 11, dadurch gekennzeichnet, daß die Leiterbahnen (80, 81, 82, 83, 84) auf der Schaltscheibe in Form von konzentrischen Kreisringen angeordnet sind, daß jeder Kreisring durch mindestens einen Isolierkörper (85) in mehrere voneinander isolierte Ringstücke aufgeteilt ist, daß die Anzahl der Kreisringe (80, 81, 82, 83, 84) der Anzahl der Zuleitungen vom Betriebsschalter (50) und vom Plus- (63) und Minuspol (64) einer Spannungsquelle (62) entspricht und daß zwischen den Kreisringen eine Anzahl von leitenden Brücken (86, 87, 88) besteht, die gleich der Zahl der während einer Verstellung des beweglichen Systems von einer Endlage in die andere Endlage nötigen Schaltvorgänge ist.

13. Stellantrieb nach Anspruch 12, dadurch gekennzeichnet, daß auf zwei Kreisringen (80, 82) neben den Schleifkontakten (73, 74) der Zuleitungen auch die Anschlußkontakte (67, 68) für den Elektromotor (69) schleifen.

14. Stellantrieb nach Anspruch 13, dadurch gekennzeichnet, daß die Schleifkontakte (72, 73, 74, 75, 76) der Gruppe von Zuleitungen, die während des Betriebes der Anlage abwechselnd über die aus einem Ringstück oder zwei Ringstücken und einer leitenden Brücke bestehenden Kontaktbahnen (89, 90, 91, 92, 93 aus Fig. 4 oder 100, 101, 102, 103 und 104 aus Fig. 6) mit dem entsprechenden Anschlußkontakt (67, 68), des Elektromotors (69) verbunden werden, auf nebeneinanderliegenden Kreisbahnen schleifen.

15. Stellantrieb nach Anspruch 14, dadurch gekennzeichnet, daß jeder der beiden Anschlußkontakte (67, 68) für den Elektromotor (69) auf einem Kreisring schleift, der so zwischen den anderen Kreisringen einer Gruppe liegt, daß die Differenz der Anzahlen von zur selben Gruppe gehörenden Kreisringen, deren Entfernung vom Mittelpunkt der Schaltscheibe (9) größer und kleiner als die des Kreisringes ist, auf dem der dieser Gruppe entsprechende Anschlußkontakt (67, 68) des Elektromotors (69) schleift, höchstens den Wert eins hat.

16. Stellantrieb nach mindestens einem der Ansprüche 12 bis 15, dadurch gekennzeichnet, daß die Entfernung von zu verschiedenen Kontaktbahnen gehörenden und voneinander isolierten Ringstücken eines Kreisringes größer ist als der Durchmesser der von einer Kontaktperle (30) berührten Fläche.

**Claims**

1. Actuating drive for a movable system to be adjusted into several rest positions, especially for a step-by-step displacement of the inclination of motor vehicle headlights, comprising a gear (1, 5), an electric motor (69) and a switching disk (9) moved by this motor through a coupling mechanism (1, 5, 15, 21, 40; 111), which switching disk together with stationary contacts (72, 73, 74, 75, 76), which are controllable in different ways, forms several position switches and, when the desired rest position of the movable system is reached, effects a switching off of the electric motor (69), characterized in that the coupling mechanism moves the switching disk (9) from position to position of the position switches (9, 72, 73, 74, 75, 76) through intermittent snap-actions, and the subsequent snap-action is effected, when the electric motor (69) reaches a position assigned to the next switching position.

2. Actuating drive according to claim 1, characterized in that the snap-action arrangement has at least one spring element (21, 111) to be tensioned by the motion of the electric motor between two positions assigned to neighbouring rest positions and a locking device (15), with the aid of which the switching disk (9) is lockable in the stable switching positions and that the locking is detachable in the positions of the electric motor which correspond to the rest positions of the movable system and that the switching disk (9) may then be brought into the next stable switching position with the aid of the prestressed spring element (21, 111).

3. Actuating drive according to claim 2, characterized in that the locking device (15) consists of a locking pin (16) located in a guide (149), which locking pin is provided with a shoulder (17) and displaceable in the radial direction, and of a spring (18) which presses the locking pin (16) into recesses (43, 44, 45, 46).

4. Actuating drive according to claim 3, characterized in that a continuously moved driven wheel (1) has two stop faces (41, 42) the angular distance of which is approximately twice as large as the angle over which the driven wheel glides in the course of the motion between two positions which correspond to neighbouring positions of the movable system and in said positions in dependence on the moving direction of the electric motor the one or the other of the stop faces acts upon the shoulder (17) of the locking pin (16) in such a manner that, against the force of the spring (18), said locking pin is pushed back from the recess (43, 44, 45, 46) into which it projects.

5. Actuating drive according to any one of claims 1 to 4, characterized in that the driven shaft (2) and the switching disk (9) are secured to each other in a manner protected against twisting and form a snap-action unit.

6. Actuating drive according to any one of claims 2 to 5, characterized in that the locking device (15) is held on the snap-action parts (2, 9) of the actuating drive.

7. Actuating drive according to any one of claims 2 to 6, characterized in that the driven wheel (1) and the snap-action parts (2, 9) are operatively connected by the spring elements (21, 111), which may be tensioned and untensioned relative to one another by the motion of the driven wheel (1) and the snap-action parts (2 and/or 9).

8. Actuating drive according to any one of claims 2 to 7, characterized in that on both ends the spring elements (111) are acted upon both by a continuously moved part (1) and by a snap-action part (9) and are also prestressed, when the actuating drive is idle.

9. Actuating drive according to claim 7, characterized in that the spring element is a helical spring (21) which with its windings embraces a cylindrical body (6) concentrically arranged to the axis of rotation of the switching disk (9) and of the driven wheel (1) and which is supported on a snap-action part (9).

10. Actuating drive according to claim 7 or 8, characterized in that at least one helical spring (111) is concentrically arranged on the common axis of rotation of driven shaft (2), driven wheel (1) and switching disk (9), and that each end of the available helical springs (111) may be acted upon by both the driven wheel (1) and by a snap-action part (10) and that the stops (146, 147) by which the switching disk (9) acts upon the helical springs (111) and the helical springs (111) are located in the vicinity of the rim of the switching disk (9).

11. Actuating drive according to at least any one of the preceding claims, characterized in that the switching disk (9) is provided with metal conductors (80, 81, 82, 83, 84) insulated against one another the number of which depends on the number of position switches and that sliding contacts (72, 73, 74, 75, 76) slide along said metal conductors, when the switching disk (9) is moved by a snap-action.

12. Actuating drive according to claim 11, characterized in that the metal conductors (80, 81, 82, 83, 84) are arranged on the switching disk in the shape of concentrical circular rings, that each circular ring is divided into several ring portions insulated against one another by at least one insulating body (85), that the number of circular rings (80, 81, 82, 83, 84) corresponds to the number of leads from the operating switch (50) and from the positive (63) and the negative terminal (64) of a voltage source (62) and that there is a number of conductive bridges between the circular rings, which number is equal to the number of switching operations necessary in the course of the displacement of the movable system from one end position into the other end position.

13. Actuating drive according to claim 12, characterized in that beside the sliding contacts (73, 74) of the leads also the connecting contacts (67, 68) for the electric motor (69) slide on two circular rings (80, 82).

14. Actuating drive according to claim 13, characterized in that the sliding contacts (72, 73, 74, 75, 76) of the group of leads which, when the unit is operated, are alternately connected to the corresponding connecting contact (67, 68) of the electric motor (69) via the contact paths (89, 90, 91, 92, 93 of Fig. 4 or 100, 101, 102, 103 and 104 of Fig. 6) consisting of one ring portion or of two ring portions and a conductive bridge slide on neighbouring orbits.

15. Actuating drive according to claim 14, characterized in that each of the two connecting contacts (67, 68) for the electric motor (69) slides on a circular ring which is located between the other circular rings of a group in such a way that the number of circular rings whose distance from the centre of the switching disk (9) is larger and the number of circular rings whose distance from the centre of the switching disk (9) is smaller than that of the circular ring on which the connecting contact (67, 68) of the electric motor (69) slides, which is assigned to this group, differ at most by one.

16. Actuating drive according to at least any one of claims 12 to 15, characterized in that the distance between ring portions of a circular ring insulated from each other and assigned to different contact paths is bigger than the diameter of a face touched by a contact pill (30).

## Revendications

1. Commande de position d'un dispositif mobile et réglable à plusieurs positions de repos, en particulier pour le réglage pas-à-pas de l'inclinaison des phares de véhicules automobiles, comprenant un engrenage (1, 5), un moteur électrique (69) et un disque de commutation (9), actionné par le moteur par l'intermédiaire d'un mécanisme de couplage (1, 5, 15, 21, 40; 111), disque qui forme, avec des contacts électriques fixes (72, 73, 74, 75, 76) pouvant être contrôlés différemment, plusieurs interrupteurs de position et assure une mise hors circuit du moteur électrique (69) lorsque la position de repos souhaitée du dispositif mobile est atteinte, ladite commande de position étant caractérisée en ce que le mécanisme de couplage (1, 5, 15, 21, 40; 111) actionne le disque de commutation (9) avec des déplacements brusques à intervalles, de position de commutation en position de commutation des interrupteurs de position (9, 72, 73, 74, 75, 76), le déplacement brusque subséquent ayant lieu lorsque le moteur électrique (69) atteint une position associée à la position de commutation suivante.

2. Commande de position selon la revendication 1, caractérisée en ce que l'arrangement à action brusque comprend au moins un élément à ressort (21, 111), qui peut être mis sous tension par le déplacement du moteur électrique entre deux positions associées à deux positions de repos voisines du dispositif mobile, et un dispositif de verrouillage (15), à l'aide duquel le disque de commutation (9) peut être verrouillé dans les positions de commutation stables, en ce que le verrouillage peut être libéré dans les positions du moteur électrique qui correspondent aux positions de repos du dispositif mobile et en ce que le disque de commutation (9) peut alors être amené, à l'aide de l'élément à ressort préalablement mis sous tension (21, 111), dans la position de commutation stable suivante.

3. Commande de position selon la revendication 2, caractérisée en ce que le dispositif de verrouillage (15) consiste en une cheville de verrouillage (16), disposée dans un guide (149) et qui est prévue avec un épaulement (17) et peut être déplacée axialement, et en un ressort (18) qui pousse la cheville (16) dans des évidements (43, 44, 45, 46).

4. Commande de position selon la revendication 3, caractérisée en ce qu'une roue de sortie (1) entraînée de manière continue présente deux faces de butée (41, 42) dont la distance angulaire est aproximativement deux fois plus grande que l'angle parcouru par la roue de sortie (1) lors du déplacement entre deux positions correspondant à des positions, l'une ou l'autre suivant le sens du mouvement du moteur électrique agit sur l'épaulement (17) de la cheville de verrouillage (16) d'une manière telle que celle-ci est repoussée, contre la force du ressort (18), hors de l'évidement (43, 44, 45, 46) dans lequel elle fait saillie.

5. Commande de position selon l'une quelconque des revendications 1 à 4, caractérisée en ce que l'arbre de sortie (2) et le disque de commutation (9) sont fixés l'un à l'autre sans possibilité de rotation et constituent une unité à action brusque.

6. Commande de position selon l'une quelconque des revendications 2 à 5, caractérisée en ce que le dispositif de verrouillage (15) est maintenu sur les parties à action brusque (2, 9) de ladite commande.

7. Commande de position selon l'une quelconque des revendications 2 à 6, caractérisée en ce que la roue de sortie (1) et les parties à action brusque (2, 9) sont liées, pour l'actionnement, par les éléments à ressort (21, 111) qui peuvent être mis en tension et relâchés par le déplacement relatif de la roue de sortie (1) et des parties à action brusque (2 et/ou 9).

8. Commande de position selon l'une quelconque des revendications 2 à 7, caractérisée en ce que les éléments à ressort (111) sont sollicités aux deux extrémités aussi bien par une partie (1) entraînée de manière continue que par une partie à action brusque (9) et sont précontraints lorsque ladite commande est au repos.

9. Commande de position selon la revendication 7, caractérisée en ce que l'élément à ressort est un ressort hélicoîdal (21) qui entoure par ses spires un corps cylindrique (6) concentrique avec l'axe de rotation du disque de commutation (9) et de la roue de sortie (1) et qui s'appuie sur une partie à action brusque (9).

10. Commande de position selon l'une des revendications 7 ou 8, caractérisée en ce qu'au moins un ressort hélicoïdal (111) est disposé concentriquement à l'axe de rotation commun de l'arbre de sortie (2), de la roue de sortie (1) et du disque de commutation (9), en ce que les extrémités des ressorts hélicoïdaux (111) prévus sont sollicitées respectivement aussi bien par la roue de sortie (1) que par une partie à action brusque (10) et en ce que les ressorts hélicoïdaux (111) se trouvent au voisinage du bord du disque de commutation (9).

11. Commande de position selon au moins une des revendications précédentes, caractérisée en ce que, sur le disque de commutation (9), sont prévus des pistes conductrices (80, 81, 82, 83, 84) isolées les unes des autres dont le nombre dépend du nombre d'interrupteurs de position, pistes le long desquelles glissent des contacts glissants (72, 73, 74, 75, 76) lors du déplacement brusque du disque de commutation (9).

12. Commande de position selon la revendication 11, caractérisée en ce que les pistes conductrices (80, 81, 82, 83, 84) sont disposées sur le disque de commutation sous forme d'anneaux circulaires concentriques, en ce que chaque anneau est divisé en plusieurs parties d'anneau isolées les unes des autres par au moins un corps isolant (85), en ce que le nombre des anneaux circulaires (80, 81, 82, 83, 84) correspond au nombre des conducteurs venant du commutateur de fonctionnement (50) et des bornes positive (63) et négative (64) d'une source de tension (62) et en ce qu'il existe entre les anneaux circulaires un nombre de ponts conducteurs (86, 87, 88) qui est égal au nombre des opérations de commutation nécessaires pendant le déplacement du dispositif mobile d'une position extrême à l'autre.

13. Commande de position selon la revendication 12, caractérisée en ce que les contacts de liaison (67, 68) pour le moteur électrique (69) glissent sur deux anneaux circulaires (80, 82) à côté des contacts glissants (73, 74) des conducteurs.

14. Commande de position selon la revendication 13, caractérisée en ce que les contacts glissants (72, 73, 74, 75, 76) du groupe de conducteurs, qui sont reliés, pendant le fonctionnement du système, alternativement aux contacts de liaison correspondants (67, 68) du moteur électrique (69) par l'intermédiaire des pistes de contact (89, 90, 91, 92, 93, sur la figure 4 ou 100, 101, 102, 103, 104 sur la figure 6) consistant en une ou deux parties d'anneau et un pont conducteur, glissent sur des pistes circulaires adjacentes.

15. Commande de position selon la revendication 14, caractérisée en ce que chacun des deux contacts de liaison (67, 68) pour le moteur électrique (69) glisse sur un anneau circulaire qui est disposé de telle sorte, entre les autres anneaux d'un groupe, que la différence des nombres d'anneaux circulaires appartenant au même groupe, dont la distance au centre du disque de commutation (9) est respectivement plus grande et plus petite que celle de l'anneau circulaire sur lequel glisse le contact de liaison (67, 68) correspondant de ce groupe, est au maximum égale à un.

16. Commande de position selon au moins une des revendications 12 à 15, caractérisée en ce que la distance entre des parties d'anneau d'un anneau circulaire isolées les unes des autres et appartenant à des pistes de contact différentes est plus grande que le diamètre de la surface touchée par un plot de contact (30).

Fig. 1

## Fig. 2

# Fig. 3

## Fig. 4

Fig. 5

## Fig. 6

# Fig. 7

# Fig. 8

Fig. 9